# EUROPEAN PATENT APPLICATION

(11) **EP 4 545 588 A1**
(43) Date of publication of application: **30.04.2025**
(21) Application number: 23826814.8
(22) Date of filing: 02.05.2023
(51) Int. Cl.: C08G 75/04

(54) **SULFUR-CONTAINING HIGH MOLECULAR WEIGHT COMPOUND AND METHOD FOR PRODUCING SAME, POLYMER COMPOSITION, AND SULFUR-CONTAINING COMPOUND**

(30) Priority: 24.06.2022 JP 2022102152
(71) Applicant: OSAKA UNIVERSITY, Suita-shi Osaka 565-0871 (JP)
(72) Inventor: KOBAYASHI, Yuichiro, Suita-shi, Osaka 565-0871 (JP); YAMAGUCHI, Hiroyasu, Suita-shi, Osaka 565-0871 (JP); HORIGUCHI, Akiyoshi, Suita-shi, Osaka 565-0871 (JP); KITANO, Daiki, Suita-shi, Osaka 565-0871 (JP); HASHIMOTO, Shun, Suita-shi, Osaka 565-0871 (JP); NISHIMURA, Ryuto, Suita-shi, Osaka 565-0871 (JP)
(74) Representative: Vossius & Partner Patentanwälte Rechtsanwälte mbB
(86) International application number: PCT/JP2023/017132
(87) International publication number: WO 2023/248625

(57) **Abstract**

Provided is a novel sulfur-containing polymer and a method for producing the same, a composition comprising the novel sulfur-containing polymer, and a sulfur-containing compound. The sulfur-containing macromolecular compound of the present invention has a structural unit represented by, for example, the following formula (1):

-R¹-R-R¹-(S)ₙ- (1)

wherein in formula (1), n represents a number of 1 or more, R represents an organic group, and R¹ represents a divalent organic group derived from a polycondensable functional group. The method for producing a sulfur-containing macromolecular compound of the present invention comprises reacting a linear sulfur polymer and compound C having two polycondensable functional groups to obtain a sulfur-containing macromolecular compound.

## Description

### Technical Field

The present invention relates to a sulfur-containing macromolecular compound and a method for producing the same, a polymer composition, and a sulfur-containing compound.

### Background Art

Macromolecular compounds that contain sulfur (sulfur-containing polymers) have properties that are not found in polymers composed of carbon atoms, and are therefore expected to be applicable in various fields. For example, sulfur-containing polymers are known to be useful as positive electrode materials for various batteries because of their high capacitance and high transparency, and are expected to be applied to optical fields such as lenses. Moreover, sulfur, which is the raw material for sulfur-containing polymers, is a surplus resource and is inexpensive, so that sulfur-containing polymers are also attracting attention from an economic standpoint.

From this viewpoint, various methods for producing sulfur-containing polymers have been investigated in recent years. In particular, sulfur polymers (-(S)ₙ-) are unstable because they degrade at room temperature, and are also insoluble in solvents and have poor processability. Accordingly, there is an urgent need to establish a technology for efficiently producing sulfur-containing polymers. For example, NPL 1 discloses a method for producing a sulfur-containing polymer having a crosslinked structure by reacting sulfur and a monomer having two or more vinyl groups (so-called inverse vulcanization method). By employing the inverse vulcanization method, it is possible to suppress the degradation of raw materials during production, and to obtain a sulfur-containing polymer having a stable structure.

### Citation List

### Non-patent Literature

NPL 1: Nature Chemistry, Vol. 5, 518-524 (2013)

### Summary of Invention

### Technical Problem

However, the production method disclosed in NPL 1 has problems in that the synthesis conditions are complicated, and in that the polymer structure is easily restricted due to the need to form a crosslinked structure, resulting in low freedom in polymer design. As with carbon-based macromolecular compounds, if sulfur-containing polymers can be produced using, for example, polycondensation, it will be possible to obtain sulfur-containing polymers by very simple methods, and to obtain sulfur-containing polymers with various compositions and structures. It will also be possible to provide, for example, unprecedented performance (e.g., mechanical properties). From this viewpoint, there is a strong demand for the development of a novel sulfur-containing polymer and a method for producing the same.

The present invention has been accomplished in view of the above. An object of the present invention is to provide a novel sulfur-containing polymer and a method for producing the same. Another object of the present invention is to provide a composition comprising the novel sulfur-containing polymer, and a sulfur-containing compound.

### Solution to Problem

The present inventors conducted extensive research to achieve the above objects, and found that the objects can be achieved by introducing a polycondensable functional group into the structure, and by utilizing a polycondensation reaction. The present invention has been accomplished based on this finding.

Specifically, the present invention includes, for example, the subject matter described in the following items.
Item 1
   A sulfur-containing macromolecular compound having a structural unit represented by the following formula (1):

   -R¹-R-R¹-(S)ₙ- (1)

   wherein in formula (1), n represents a number of 1 or more, R represents an organic group, and two R¹s are the same or different and each represents a divalent organic group derived from a polycondensable functional group; the following formula (1'):

   -R¹-R-(S)ₙ- (1' )

   wherein in formula (1'), n, R, and R¹ are respectively the same as n, R, and R¹ in formula (1); or the following formula (1"): -CO-(S)ₙ- (1").
Item 2
   The sulfur-containing macromolecular compound according to Item 1, wherein R¹ is -CH₂-CH(OH)-, -CH₂-CH₂-CH (OH)-, -CO-, - COO-, or -NHCO-.
Item 3
   A method for producing a sulfur-containing macromolecular compound, comprising reacting a linear sulfur polymer and compound C having at least two polycondensable functional groups to obtain a sulfur-containing macromolecular compound.
Item 4
   The method for producing a sulfur-containing macromolecular compound according to Item 3, wherein compound C is represented by the following formula (2):

   R²-R-R² (2)

   wherein in formula (2), R is an organic group, and two R²s are the same or different and each is a polycondensable functional group.
Item 5
   The method for producing a sulfur-containing macromolecular compound according to Item 4, wherein R² is an epoxy group, a halogen atom, a glycidyl group, -C(=O)X (X is a halogen atom), -COOH, or -NCO.
Item 6
   A polymer composition comprising the sulfur-containing macromolecular compound according to Item 1 or 2.
Item 7
   A sulfur-containing compound having a structure in which an organic group derived from a polycondensable functional group is bonded to each end of a sulfur polymer represented by the following formula (3):

   -(S)ₙ- (3)

   wherein in formula (3), n represents a number of 1 or more.

### Advantageous Effects of Invention

The present invention can provide a novel sulfur-containing macromolecular compound. Further, according to the production method of the present invention, a novel sulfur-containing macromolecular compound can be easily obtained.

### Brief Description of Drawings

Fig. 1 is a scheme showing an outline of the reaction performed in Example 1.
Fig. 2 is a scheme showing an outline of the reaction performed in Comparative Example 1.
Fig. 3 is a scheme showing an outline of the reaction performed in Example 8.
Fig. 4 shows the ¹H-NMR spectrum (measurement solvent: DMSO-D6) of the sulfur-containing macromolecular compound obtained in Example 1.
Fig. 5 shows the elemental mapping results of the sulfur-containing macromolecular compound obtained in Example 1.
Fig. 6 shows the ¹H-NMR spectrum (measurement solvent: DMSO-D6) of the comparison sample obtained in Comparative Example 1.
Fig. 7 shows the results of the tensile test of the sulfur-containing macromolecular compound obtained in Example 1 and the comparison sample obtained in Comparative Example 1.
Fig. 8 shows the results of the tensile test of the sulfur-containing macromolecular compounds obtained in the Examples.
Fig. 9 shows the ¹H-NMR spectrum (measurement solvent: DMSO-D6) of the sulfur-containing compound obtained in Example 8.
Fig. 10 shows the results of the tensile test of the sulfur-containing macromolecular compound obtained in Example 9.
Fig. 11 shows the results of the tensile test of the sulfur-containing macromolecular compounds obtained in Examples 10 and 11, and Comparative Example 2.
Fig. 12 (a) shows the ¹H-NMR spectrum of the sulfur-containing macromolecular compound obtained in Example 12, and (b) shows the microscopic Raman spectrum of the sulfur-containing macromolecular compound obtained in Example 12.

### Description of Embodiments

The following describes embodiments of the present invention in detail. In the present specification, the terms "comprise," "contain," and "include" include the concepts of comprising, containing, including, consisting essentially of, and consisting of.

### 1. Sulfur-Containing Macromolecular Compound

The sulfur-containing macromolecular compound of the present invention has a structural unit represented by the following formula (1):

-R¹-R-R¹-(S)ₙ- (1)

wherein in formula (1), n represents a number of 1 or more, R represents an organic group, and two R¹s are the same or different and each represents a divalent organic group derived from a polycondensable functional group; the following formula (1'):

-R¹-R-(S)ₙ- (1')

wherein in formula (1'), n, R, and R¹ are respectively the same as n, R, and R¹ in formula (1); or the following formula (1"):

-CO-(S)ₙ- (1")

wherein in formula (1"), n is the same as n in formula (1). That is, the sulfur-containing macromolecular compound of the present invention is a macromolecular compound having a structure represented by formula (1) as a repeating unit, a macromolecular compound having a structure represented by formula (1') as a repeating unit, or a macromolecular compound having a structure represented by formula (1") as a repeating unit.

The sulfur-containing macromolecular compound of the present invention is novel, is expected to exhibit functions not found in conventional sulfur polymers, and is unlikely to decompose. For example, the sulfur-containing macromolecular compound of the present invention has excellent mechanical properties. Further, the sulfur-containing macromolecular compound of the present invention can be obtained by a simple method.

In formula (1), n is not particularly limited as long as it is a number of 1 or more. From the viewpoint of easily improving the mechanical properties of the sulfur-containing macromolecular compound, n is preferably 2 or more, more preferably 3 or more, even more preferably 4 or more, and particularly preferably 5 or more. The upper limit of n is also not particularly limited, and n can be, for example, 10000 or less, preferably 5000 or less, more preferably 3000 or less, even more preferably 1000 or less, and particularly preferably 500 or less. n can also be 10 or less. The value of n can be calculated based on the ¹H-NMR spectrum and elemental analysis results of the sulfur-containing macromolecular compound.

In formula (1), R can be, for example, a divalent or higher-valent organic group, and preferably a divalent organic group. The divalent organic group refers to a group having one or more carbon atoms, such as a group formed by removing two hydrogen atoms from an organic compound.

Examples of R in formula (1) include:
an alkylene group (-CₘH₂ₘ-, m is an integer) optionally having one or more substituents X,
an alkylene group optionally having one or more substituents X and optionally having one or more ether bonds (-O-) inserted therein,
an alkenylene group optionally having one or more substituents X,
an alkynylene group optionally having one or more substituents X,
a cycloalkylene group optionally having one or more substituents X,
a cycloalkenylene group optionally having one or more substituents X,
a cycloalkadienylene group optionally having one or more substituents X,
an arylene group optionally having one or more substituents X,
an aralkylene group optionally having one or more substituents X,
a non-aromatic heterocyclic group optionally having one or more substituents X, and
a heteroarylene group optionally having one or more substituents X.

The number of carbon atoms in the alkylene group and the alkylene group optionally having one or more ether bonds (-O-) inserted therein is not particularly limited, and can be, for example, 1 or more and 20 or less, preferably 2 or more, and preferably 15 or less, more preferably 10 or less, and even more preferably 8 or less.

The number of carbon atoms in the alkenylene group is not particularly limited, and can be, for example, 2 or more and 20 or less, preferably 3 or more, and preferably 15 or less, more preferably 10 or less, and even more preferably 8 or less.

The number of carbon atoms in the alkynylene group is not particularly limited, and can be, for example, 2 or more and 20 or less, preferably 3 or more, and preferably 15 or less, more preferably 10 or less, and even more preferably 8 or less.

The number of carbon atoms in the cycloalkylene group, cycloalkenylene group, and cycloalkadienylene group is not particularly limited, and can be, for example, 3 or more and 20 or less, preferably 4 or more, and preferably 15 or less, more preferably 10 or less, and even more preferably 8 or less.

The number of carbon atoms in the arylene group is not particularly limited, and can be, for example, 6 or more and 18 or less. The number of carbon atoms in the aralkylene group is not particularly limited, and can be, for example, 6 or more and 18 or less.

The non-aromatic heterocyclic group may be a non-aromatic heterocyclic group that is monocyclic, bicyclic, tricyclic, or tetracyclic, and that contains, for example, 1 to 4 heteroatoms selected from oxygen, sulfur, and nitrogen atoms in addition to carbon atoms as ring-constituting atoms. The non-aromatic heterocyclic group is saturated or unsaturated.

Examples of the heteroarylene group include monocyclic aromatic heterocyclic groups (e.g., 5- or 6-membered monocyclic aromatic heterocyclic groups) and aromatic fused heterocyclic groups (e.g., 5- to 18-membered aromatic fused heterocyclic groups).

The type of substituent X is not particularly limited, and examples include hydrocarbon groups, halo groups, nitro groups, cyano groups, oxo groups, thioxo groups, sulfo groups, sulfamoyl groups, sulfinamoyl groups, and sulfenamoyl groups. The hydrocarbon group is an alkyl group, an alkenyl group, an alkynyl group, a cycloalkyl group, a cycloalkenyl group, a cycloalkadienyl group, an aryl group, an aralkyl group, or the like, and has, for example, 1 to 10 carbon atoms.

Substituent X may be a polymer chain, specifically -R¹-(S)ₙ-. That is, R in formula (1) may further have -R¹-(S)ₙ- bonded to the two -R¹-(S)ₙ- moieties. In this case, the sulfur-containing macromolecular compound can form a three-dimensional mesh structure. When substituent X is -R¹-(S)ₙ-, R¹ binds to R, and the terminus of the -(S)ₙ- moiety is hydrogen or an alkali metal, which is described below.

In formula (1), R is preferably an alkylene group optionally having one or more substituents X, or an arylene group optionally having one or more substituents X. In this case, it is easy to produce the sulfur-containing macromolecular compound, and the mechanical properties are also easily improved. In formula (1), R is more preferably an alkylene group optionally having one or more substituents X, and even more preferably an alkylene group having no substituent X. In these cases, the number of carbon atoms in the alkylene group is preferably 1 to 10, more preferably 2 to 8, and particularly preferably 3 to 6.

In formula (1), R¹ is not particularly limited as long as it is a divalent organic group derived from a polycondensable functional group. The divalent organic group refers to a group having one or more carbon atoms, such as a group formed by removing two hydrogen atoms from an organic compound. In formula (1), two R¹s are preferably the same, and it is more preferable that the -R¹-R-R¹- moiety in formula (1) is symmetric around R.

The type of polycondensable functional group is not particularly limited. In particular, the polycondensable functional group is preferably a functional group that can be polycondensed with a sulfur polymer represented by the following formula (4):

Y-(S)ₙ-Y (4)

wherein in formula (4), n represents a number of 1 or more, and two Ys are the same or different and each represents a hydrogen atom or an alkali metal. In formula (4), two Ys are preferably the same.

Examples of the polycondensable functional group include monovalent groups, such as an epoxy group (a group obtained by removing one hydrogen from ethylene oxide), a glycidyl group, -C(=O)X (X is a halogen atom such as chlorine or fluorine), -COOH, and -NCO. Just to be sure, in formula (1), the polycondensable functional group that forms R¹ is a group other than halo groups (fluoro group, chloro group, etc.).

When the polycondensable functional group is an epoxy group, R¹ in formula (1) is -CH₂-CHOH-. When R¹ in formula (1) is -CH₂-CHOH-, carbon with no hydroxyl group attached can be bonded to R, and carbon with a hydroxyl group attached can be bonded to S, or vice versa. In one of the two -CH₂-CHOH- moieties bonded to R, carbon with a hydroxyl group attached can be bonded to S, and in the other, carbon with a hydroxyl group attached can be bonded to R.

When the polycondensable functional group is a glycidyl group, R¹ in formula (1) is -CH₂-CH₂-CHOH-. When R¹ in formula (1) is -CH₂-CH₂-CHOH-, terminal carbon without a hydroxyl group attached can be bonded to R, and carbon with a hydroxyl group attached can be bonded to S, or vice versa. In one of the two - CH₂-CH₂-CHOH- moieties bonded to R, carbon with a hydroxyl group attached can be bonded to S, and in the other, carbon with a hydroxyl group attached can be bonded to R.

When the polycondensable functional group is -C(=O)X, R¹ in formula (1) is -CO-.

When the polycondensable functional group is -COOH, R¹ in formula (1) is -COO-. When R¹ is -COO-, in the two -COO- moieties, ester carbon is bonded to R, and ester oxygen is bonded to S.

When the polycondensable functional group is -NCO, R¹ in formula (1) is -NHCO-. When R¹ is -NHCO-, in the two -NHCO-moieties, nitrogen is bonded to R, and oxygen is bonded to S.

In formula (1), R¹ is preferably -CH₂-CH(OH)-, -CH₂-CH₂-CHOH-, -CO-, -COO-, or -NHCO- mentioned above. In this case, it is easy to produce the sulfur-containing macromolecular compound, the structure is stable because decomposition is unlikely to occur, and excellent mechanical properties tend to be ensured. R¹ is more preferably -CH₂-CH(OH)-.

In formula (1), any combination of R and R¹ is possible, and one embodiment may be a combination of R being an alkylene group optionally having one or more substituents X, and two R¹s being -CH₂-CH(OH)-, -CH₂-CH₂-CHOH-, -CO-, -COO-, or -NHCO-.

In formula (1), the terminus of the -(S)ₙ moiety is hydrogen or an alkali metal, which is described below.

On the other hand, in formula (1'), n, R, and R¹ are respectively the same as n, R, and R¹ in formula (1) as described above, and their preferred embodiments are also the same as those of n, R, and R¹ in formula (1).

As shown in formula (1"), the sulfur-containing macromolecular compound can have a structural unit represented by -C (=O)-(S)ₙ-.

The sulfur-containing macromolecular compound of the present invention may have other structural units as long as it has the structural unit represented by formula (1), the structural unit represented by formula (1'), or the structural unit represented by formula (1"). Alternatively, the sulfur-containing macromolecular compound of the present invention may be formed only from the structural unit represented by formula (1), the structural unit represented by formula (1'), or the structural unit represented by formula (1"). The sulfur-containing macromolecular compound of the present invention preferably contains the structural unit represented by formula (1), the structural unit represented by formula (1'), or the structural unit represented by formula (1") in an amount of 80 mass% or more, more preferably 90 mass% or more, and even more preferably 95 mass% or more.

The weight average molecular weight of the sulfur-containing macromolecular compound of the present invention is not particularly limited. For example, the weight average molecular weight of the sulfur-containing macromolecular compound of the present invention is 1,000 or more and 100,000 or less. The weight average molecular weight of the sulfur-containing macromolecular compound of the present invention is preferably 4,000 or more and 20,000 or less. In the present specification, the weight average molecular weight (Mw) is a value measured by gel permeation chromatography (GPC).

The content of S (sulfur element) in the sulfur-containing macromolecular compound of the present invention is not particularly limited. For example, in terms of easily ensuring excellent mechanical properties, the content of S is preferably 30 mass% or more and 99 mass% or less, with a more preferred lower limit of 35 mass%, and with a more preferred upper limit of 80 mass%, a further more preferred upper limit of 70 mass%, and a particularly preferred upper limit of 50 mass%.

The sulfur-containing macromolecular compound of the present invention is novel, and various structures can be introduced into the skeleton, allowing molecular design according to the application. In particular, the sulfur-containing macromolecular compound has excellent mechanical properties while retaining the properties of a sulfur-based polymer. For example, when made into a film material, it has excellent tensile strength and mechanical properties. Conventional sulfur-containing macromolecular compounds have insufficient mechanical properties, which is an obstacle to their application to various uses. In contrast, the sulfur-containing macromolecular compound of the present invention has excellent mechanical properties, which facilitates its application to various uses. In addition, the refractive index of the sulfur-containing macromolecular compound of the present invention can be easily controlled.

Further, the sulfur-containing macromolecular compound of the present invention can exhibit a self-healing function and can also have adhesive performance. Therefore, by forming a material containing the sulfur-containing macromolecular compound of the present invention into a desired shape, it can also be used as a self-healing material or an adhesive material.

In addition, while conventional sulfur polymers have a characteristic odor, the sulfur-containing macromolecular compound of the present invention has a suppressed odor compared to conventional sulfur polymers.

Therefore, the sulfur-containing macromolecular compound of the present invention can be applied to various uses, and is suitable for battery materials, electronic materials, optical materials, packaging materials, agricultural materials, and adhesives.

The sulfur-containing macromolecular compound of the present invention can be made into a polymer composition, either alone or in combination with other compounds and/or additives. Since the polymer composition contains the sulfur-containing macromolecular compound, it can be applied to, for example, the various applications described above, and is suitable for, for example, various optical members such as lenses, as well as for films, molding, self-healing materials, and adhesives.

The polymer composition can be used to form various materials, such as films, molded bodies, powder materials, solutions, dispersions, and pastes.

The method for producing the sulfur-containing macromolecular compound of the present invention is not particularly limited. For example, it is preferable to employ the method for producing a sulfur-containing macromolecular compound of the present invention described below to produce the sulfur-containing macromolecular compound of the present invention.

### 2. Method for Producing Sulfur-Containing Macromolecular Compound

The method for producing a sulfur-containing macromolecular compound of the present invention (hereinafter referred to as "the production method of the present invention") comprises reacting a linear sulfur polymer and compound C having at least two polycondensable functional groups to obtain a sulfur-containing macromolecular compound. More specifically, a sulfur-containing macromolecular compound can be obtained by polycondensation of a linear sulfur polymer and compound C having two polycondensable functional groups.

The linear sulfur polymer used in the production method of the present invention can be, for example, a sulfur polymer represented by the following formula (4):

Y-(S)ₙ-Y (4)

wherein in formula (4), n represents a number of 1 or more, and two Ys are the same or different and each represents a hydrogen atom or an alkali metal. In particular, in terms of excellent reactivity, two Ys both are preferably alkali metals, and more preferably sodium.

In formula (4), n is not particularly limited as long as it is a number of 1 or more. n is preferably 2 or more, more preferably 3 or more, even more preferably 4 or more, and particularly preferably 5 or more. The upper limit of n is also not particularly limited, and n can be, for example, 10000 or less, preferably 5000 or less, more preferably 3000 or less, even more preferably 1000 or less, and particularly preferably 500 or less. n can also be 10 or less. The value of n can be calculated from the MALDI-TOF MS spectrum.

The linear sulfur polymer can be obtained, for example, by the reaction of a sulfur source and a metal source. The sulfur source may be, for example, elemental sulfur or a compound containing a sulfur atom. In terms of the ease of obtaining the linear sulfur polymer, the sulfur source is preferably elemental sulfur. Examples of the elemental sulfur include cyclic sulfur composed of sulfur atoms. Typically, an eight-membered ring of sulfur can be used as the sulfur source. Such a sulfur source can be produced by a known method or can be obtained commercially.

The metal source may be, for example, an alkali metal or an alkali metal compound. The alkali metal is not particularly limited, and examples include sodium, potassium, and lithium, with sodium being preferred. Examples of the alkali metal compound include alkali metal sulfides, with sodium sulfide being preferred. The alkali metal compound may be a hydrate. The metal source is preferably an alkali metal compound, more preferably an alkali metal sulfide, and particularly preferably sodium sulfide, in that the reaction is simple and mass synthesis is possible.

The method for reacting the sulfur source and the metal source is not particularly limited. For example, the sulfur source and the metal source can be mixed in a solvent. When a solvent is used in this reaction, the type thereof is not particularly limited, and water and various organic solvents can be used. When the metal source is an alkali metal compound, particularly an alkali metal sulfide, the solvent used is preferably a water-based solvent, and particularly preferably water. When the metal source is an alkali metal, the solvent used is preferably an organic solvent, and particularly preferably a polar solvent, such as dimethylacetamide.

In the reaction between the sulfur source and the metal source, the use ratio of both is not particularly limited. For example, in terms of easily controlling the chain length of the - (S)ₙ- moiety, i.e., the value of n, the amount of the metal source used per mole of the sulfur source is preferably 0.1 to 20 mol, more preferably 0.5 to 10 mol, even more preferably 0.8 to 8 mol, and particularly preferably 1 to 3 mol. The reaction temperature when reacting the sulfur source and the metal source is not particularly limited, and can be, for example, 0 to 200°C, and preferably 15 to 80°C. The reaction time between the sulfur source and the metal source is also not particularly limited, and can be, for example, 10 minutes to 48 hours, and preferably 30 minutes to 24 hours. The reaction can be carried out, for example, in an atmosphere of inert gas such as nitrogen.

By the reaction between the sulfur source and the metal source, the linear sulfur polymer to be used in the production method of the present invention is obtained.

In compound C having at least two polycondensable functional groups used in the production method of the present invention, the polycondensable functional group is the same as described above. Therefore, in compound C, the polycondensable functional group is preferably a functional group that can be polycondensed with the sulfur polymer represented by formula (4).

That is, examples of the polycondensable functional group include monovalent groups, such as an epoxy group (a group obtained by removing one hydrogen from ethylene oxide), a glycidyl group, -C(=O)X (X is a halogen atom such as chlorine or fluorine), -COOH, and -NCO. In the production of a sulfur-containing macromolecular compound having the structural unit represented by formula (1), the polycondensable functional group is preferably a group other than halo groups (fluoro group, chloro group, etc.). In the production of a sulfur-containing macromolecular compound having the structural unit represented by formula (1'), the polycondensable functional group may be, in addition to the monovalent group mentioned above, further a halogen atom. In the production of a sulfur-containing macromolecular compound having the structural unit represented by formula (1"), the two polycondensable functional groups may be halogen atoms.

The number of polycondensable functional groups in compound C is preferably 6 or less, and more preferably 5 or less. The number of polycondensable functional groups in compound C may be two or three, and particularly preferably two.

Compound C can be a compound represented by the following formula (2):

R²-R-R² (2)

wherein in formula (2), R is an organic group, and two R²s are the same or different and each is a polycondensable functional group. This compound is a so-called bifunctional compound.

In formula (2), R is the same as R in formula (1) described above. Therefore, in formula (2), examples of R include:
an alkylene group (-CₘH₂ₘ-, m is an integer) optionally having one or more substituents X,
an alkylene group optionally having one or more substituents X and optionally having one or more ether bonds (-O-) inserted therein,
an alkenylene group optionally having one or more substituents X,
an alkynylene group optionally having one or more substituents X,
a cycloalkylene group optionally having one or more substituents X,
a cycloalkenylene group optionally having one or more substituents X,
a cycloalkadienylene group optionally having one or more substituents X,
an arylene group optionally having one or more substituents X,
an aralkylene group optionally having one or more substituents X, a non-aromatic heterocyclic group optionally having one or more substituents X, and
a heteroarylene group optionally having one or more substituents X.
Substituent X is also the same as substituent X that may be contained in formula (1) (provided that when R in formula (2) has substituent X, substituent X preferably excludes the polymer chain mentioned above).

In formula (2), R is preferably an alkylene group optionally having one or more substituents X, or an arylene group optionally having one or more substituents X. In this case, polycondensation with the linear sulfur polymer is likely to occur, and the mechanical properties of the resulting sulfur-containing macromolecular compound are also easily improved. In formula (2), R (divalent organic group) is more preferably an alkylene group optionally having one or more substituents X, and even more preferably an alkylene group having no substituent X. In these cases, the number of carbon atoms in the alkylene group is preferably 1 to 10, more preferably 2 to 8, and particularly preferably 3 to 6.

In formula (2), R² is a polycondensable functional group. Therefore, examples of R² include monovalent groups, such as an epoxy group (a group obtained by removing one hydrogen from ethylene oxide), a halogen atom, a glycidyl group, -C(=O)X (X is a halogen atom such as chlorine or fluorine), -COOH, and, -NCO. Examples of compound C include 1,2,7,8-diepoxyoctane and adipoyl chloride.

However, when producing a sulfur-containing macromolecular compound having the structural unit represented by formula (1), two R²s in formula (2) are the same or different, and examples include monovalent groups, such as an epoxy group (a group obtained by removing one hydrogen from ethylene oxide), a glycidyl group, -C(=O)X (X is a halogen atom such as chlorine or fluorine), -COOH, and -NCO. Neither of two R²s is a halo group. That is, R² excludes, for example, a fluoro group and a chloro group. On the other hand, when producing a sulfur-containing macromolecular compound having the structural unit represented by formula (1'), for example, one of two R²s in formula (2) is a monovalent group, such as an epoxy group (a group obtained by removing one hydrogen from ethylene oxide), a glycidyl group, - C(=O)X (X is a halogen atom such as chlorine or fluorine), -COOH, or -NCO, and is not a halo group, and the other R² is a halo group. In this case, the halo group is, for example, a chlorine atom, a fluorine atom, or a bromine atom.

In formula (2), any combination of R and R² is possible as long as it satisfies the above conditions. When producing a sulfur-containing macromolecular compound having the structural unit represented by formula (1), an embodiment of the compound represented by formula (2) may be a combination of R (divalent organic group) being an alkylene group optionally having one or more substituents X, and two R²s being epoxy groups (groups obtained by removing one hydrogen from ethylene oxide), -C(=O)X (X is a halogen atom such as chlorine or fluorine), -COOH, or - NCO. When producing a sulfur-containing macromolecular compound having the structural unit represented by formula (1'), an embodiment of the compound represented by formula (2) may be a combination of R (divalent organic group) being an alkylene group optionally having one or more substituents X, and while one of two R²s being an epoxy group (a group obtained by removing one hydrogen from ethylene oxide), -C(=O)X (X is a halogen atom such as chlorine or fluorine), -COOH, or -NCO, and the other R² being a chlorine atom.

When producing a sulfur-containing macromolecular compound having the structural unit represented by formula (1), specific examples of the compound represented by formula (2) include compounds represented by the following formulas (2-1) to (2-7).

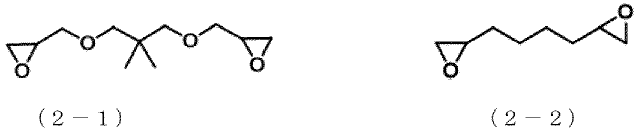

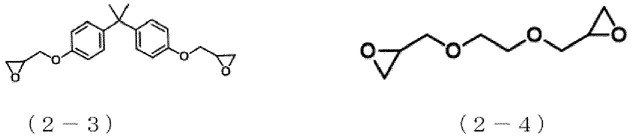

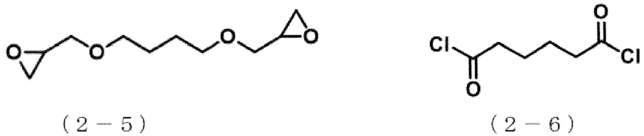

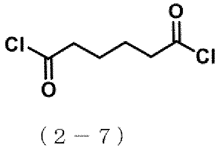

When producing a sulfur-containing macromolecular compound having the structural unit represented by formula (1'), specific examples of the compound represented by formula (2) include epichlorohydrin.

When producing a sulfur-containing macromolecular compound having the structural unit represented by formula (1"), specific examples of compound C include COCl₂.

Compound C may be the bifunctional compound represented by formula (2) or a trifunctional or higher functional compound. For example, when compound C is a trifunctional compound, it may be, for example, a compound in which another R² is further bonded to R of the compound represented by formula (2). Specific examples include a compound in which the hydrogen atom of R in the compound represented by formula (2) is further replaced by R². In this case, R² is also the same as R² in formula (2), and it is preferable that all three R² are the same.

Compound C may be the bifunctional compound represented by formula (2) or a trifunctional or higher functional compound. Specific examples of such compounds include compounds represented by the following formulas (2-8) to (2-11).

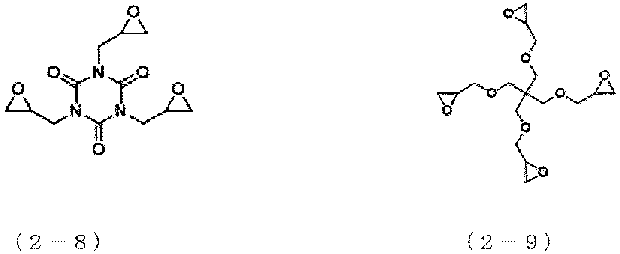

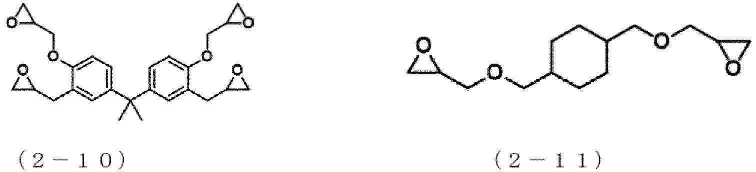

In the production method of the present invention, the method for reacting the linear sulfur polymer and compound C is not particularly limited. For example, the linear sulfur polymer and compound C can be reacted in a solvent. From the viewpoint that the reactivity of both is likely to increase, it is preferable to react the linear sulfur polymer and compound C at the interface. Specifically, solution 1 in which the linear sulfur polymer is dissolved and solution 2 in which compound C is dissolved are prepared, and the interfacial reaction can be carried out using these solutions. Therefore, solvents that phase-separate from each other (insoluble with each other) are used as a solvent for preparing solution 1 and a solvent for preparing solution 2.

Another form of the method for reacting the linear sulfur polymer and compound C is to react the linear sulfur polymer and compound C in solvent A. In this case, for example, the solvent used in the reaction to obtain the linear sulfur polymer and the solvent used in the reaction to obtain compound C may be the same or different, and is preferably the same in terms of simplicity. The reaction to obtain the linear sulfur polymer is the reaction between the sulfur source and the metal source described above.

The solvent for preparing solution 1 may be water or a water-based solvent such as an alcohol compound. Other examples include polar solvents such as dimethylacetamide and acetonitrile. Of these, the solvent for preparing solution 1 is preferably water.

On the other hand, the solvent for preparing solution 2 is preferably an organic solvent that phase-separates from the water-based solvent. Examples of such organic solvents include hydrocarbon solvents, such as benzene, toluene, xylene, and hexane; ketone solvents, such as acetone, methyl ethyl ketone, and isophorone; alcohol solvents, such as tert-butyl alcohol, benzyl alcohol, phenoxyethanol, and phenylpropylene glycol; halogenated hydrocarbon solvents, such as methylene chloride and chloroform; ether solvents, such as 1,2-dimethoxyethane, tetrahydrofuran, 1,4-dioxane, and anisole; ester solvents, such as ethyl acetate, propyl acetate, ethyl carbitol acetate, and butyl carbitol acetate; amide solvents, such as N,N-dimethylformamide and N,N-dimethylacetamide; and carbonate solvents, such as dimethyl carbonate, diethyl carbonate, and propylene carbonate. The solvent for preparing solution 2 is preferably a halogenated hydrocarbon solvent, and more preferably chloroform.

The concentration of solution 1 is not particularly limited, and can be, for example, 0.1 to 500 g/L, preferably 0.5 to 300 g/L, more preferably 1 to 200 g/L, and even more preferably 2 to 100 g/L. The concentration of solution 2 is also not particularly limited, and can be, for example, 0.1 to 500 g/L, more preferably 0.2 to 300 g/L, and even more preferably 0.5 to 200 g/L.

Examples of solvent A include the same solvents as those used to prepare solution 1 or solution 2. Among them, tetrahydrofuran, acetonitrile, N,N-dimethylformamide, dimethyl sulfoxide, and the like can be preferably used.

In the reaction between the linear sulfur polymer and compound C, the use ratio of both is not particularly limited. For example, 0.05 to 10 mol of compound C can be used per mole of the linear sulfur polymer. In the production method of the present invention, compound C is preferably used in an amount of 0.1 to 8 mol, more preferably 0.2 to 5 mol, even more preferably 0.25 to 3 mol, and particularly preferably 0.3 to 2.5 mol, per mol of the linear sulfur polymer. Therefore, even when an interfacial reaction is performed using solution 1 and solution 2, the amount of compound C used per mol of the linear sulfur polymer can be within the above range.

The interfacial reaction using solution 1 and solution 2 can be performed, for example, by the same method for known interfacial reactions. In this interfacial reaction, a catalyst can also be used, if necessary. The catalyst may be, for example, a phase-transfer catalyst conventionally used in interfacial reactions, and examples include ammonium salts with long-chain alkyl groups, such as hexadecyltrimethylammonium bromide. The amount of catalyst used is also not particularly limited, and can be the same amount for conventional interfacial reactions. In general, the phase-transfer catalyst can be used in a so-called catalytic amount.

In the production method of the present invention, when reacting the linear sulfur polymer and compound C, the reaction temperature is also not particularly limited. In particular, in the production method of the present invention, the reaction between the linear sulfur polymer and compound C is a polycondensation reaction; thus, the reaction temperature can be lower than that for conventional sulfur-containing macromolecular compounds, and can be, for example, 0 to 100°C, and preferably 10 to 80°C. The same temperature can also be used when the interfacial reaction is employed. The reaction time can be set appropriately depending on conditions, such as concentration and temperature.

After the reaction between the linear sulfur polymer and compound C is completed, the reaction product can be separated and obtained by an appropriate method. For example, after completion of the reaction, the reaction product can be separated by one or more suitable means, such as filtration, centrifugation, distillation, and drying, in combination. In the interfacial reaction, insoluble matter is generated at the interface, and by taking the above appropriate measures, the reaction product can be obtained.

The resulting reaction product is the target sulfur-containing macromolecular compound of the present invention. The resulting sulfur-containing macromolecular compound can be subjected to purification treatment or the like by an appropriate method.

In the production method of the present invention, the reaction between the linear sulfur polymer and compound C is a polycondensation reaction. Specifically, the terminal sulfur of the linear sulfur polymer reacts with the polycondensable functional groups in compound C to let the polycondensation reaction proceed, thereby producing the sulfur-containing macromolecular compound of the present invention.

By utilizing such a polycondensation reaction, a sulfur-containing macromolecular compound can be produced by a simpler method than conventional methods for producing sulfur-containing macromolecular compounds (e.g., compared to the above-mentioned inverse vulcanization method and other production methods). It is also advantageous in that the reaction temperature can be set low. In addition, in the production method of the present invention, since the linear sulfur polymer and compound C, which have little odor, are used as raw materials, deodorization during production is easy. Furthermore, for example, harmful hydrogen sulfide is less likely to be generated during production compared to the above-mentioned inverse vulcanization method and other production methods, and safety during production of the sulfur-containing macromolecular compound is likely to be improved.

Therefore, the production method of the present invention is suitable as a method for producing the sulfur-containing macromolecular compound of the present invention described above.

### 3. Sulfur-Containing Compound

The present invention also includes a sulfur-containing compound. The sulfur-containing compound has a structure in which an organic group derived from a polycondensable functional group is bonded to each end of a sulfur polymer represented by the following formula (3):

-(S)ₙ- (3)

wherein in formula (1), n represents a number of 1 or more.

In formula (3), n is not particularly limited as long as it is a number of 1 or more. n is preferably 2 or more, more preferably 3 or more, even more preferably 4 or more, and particularly preferably 5 or more. The upper limit of n is also not particularly limited, and n can be, for example, 10000 or less, preferably 5000 or less, more preferably 3000 or less, even more preferably 1000 or less, and particularly preferably 500 or less. n can also be 10 or less. The value of n can be calculated from the MALDI-TOF MS spectrum.

In the sulfur-containing compound, the organic group derived from a polycondensable functional group can be a monovalent group represented by R³-R¹-. In this formula, R¹ is the same as R¹ in formula (1) described above. Therefore, R¹ in R³-R¹ can be -CH₂-CH(OH)-, -CH₂-CH₂-CHOH-, -CO-, -COO-, or -NHCO-.

R³ in R³-R¹ is a monovalent organic group obtained by adding one hydrogen to R in formula (1). Therefore, R³ can be:
an alkyl group optionally having one or more substituents X,
an alkyl group optionally having one or more substituents X and
optionally having one or more ether bonds (-O-) inserted therein,
an alkenyl group optionally having one or more substituents X,
an alkynyl group optionally having one or more substituents X,
a cycloalkyl group optionally having one or more substituents X,
a cycloalkenyl group optionally having one or more substituents X,
a cycloalkadienyl group optionally having one or more substituents X, or
an aryl group optionally having one or more substituents X.

R³ in R³-R¹ is preferably an alkyl group optionally having one or more substituents X, or an aryl group optionally having one or more substituents X.

The sulfur-containing compound can be obtained, for example, by the reaction between the linear sulfur polymer and R³-R², R² is the same as R² in formula (2) described above. Therefore, R² is a monovalent group, such as an epoxy group (a group obtained by removing one hydrogen from ethylene oxide), a glycidyl group, -C(=O)X (X is a halogen atom such as chlorine or fluorine), -COOH, or -NCO.

For example, the sulfur-containing compound can be obtained by an interfacial reaction between the linear sulfur polymer and R³-R² in an organic solvent. The method of the interfacial reaction can be the same as the method for producing a sulfur-containing macromolecular compound of the present invention described above. R³-R² can be, for example, styrene epoxide.

The various configurations (properties, structures, functions, etc.) explained in each embodiment of the present disclosure may be combined in any way in specifying the inventions included in the present disclosure. In other words, the present disclosure includes all the subject matters comprising all combinations of the combinable configurations described in the present specification.

### Examples

The present invention is described in more detail below with reference to Examples; however, the present invention is not limited to embodiments of these Examples.

### Example 1

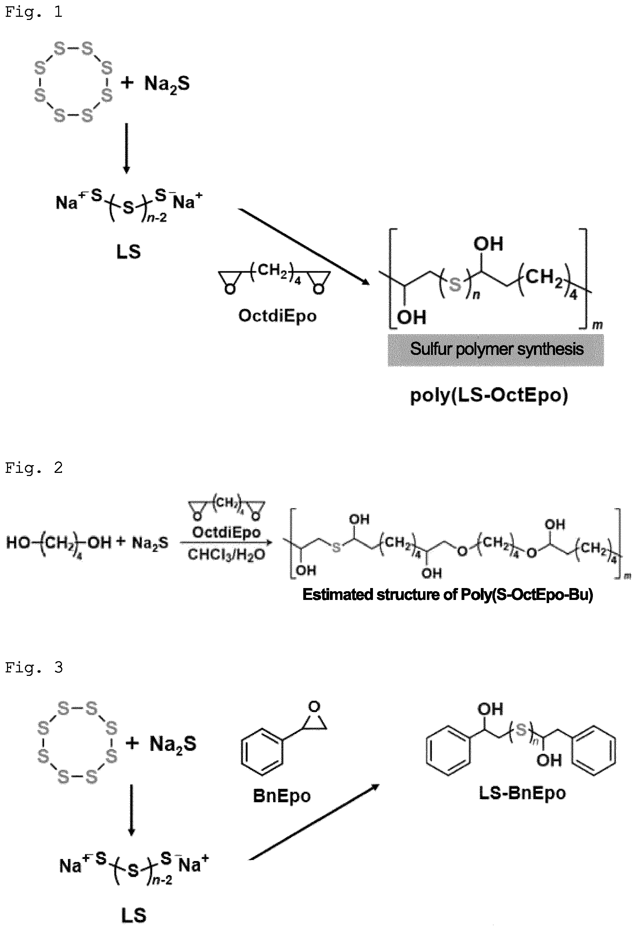

According to the reaction scheme shown in Fig. 1, a sulfur-containing macromolecular compound was synthesized. First, sulfur (523 mg, 2.04 mmol) and Na₂S (684 mg, 4.08 mmol, pentahydrate) were dissolved in 10 mL of water, followed by filtration, thereby obtaining solution 1 of a linear sulfur polymer (abbreviated as "LS"). Next, 1,2,7,8-diepoxyoctane (abbreviated as "OctdiEpo," 239 µL, 2.04 mmol) was dissolved in 10 mL of chloroform to prepare solution 2, and 0.005 mmol of hexadecyltrimethylammonium bromide as a phase-transfer catalyst was further added to solution 2. Solution 2 was added to solution 1, followed by stirring at room temperature (25°C) for 1 day to perform an interfacial reaction (polycondensation reaction). Solution 1 and solution 2 were prepared so that the molar ratio of LS to OctdiEpo (LS:OctdiEpo) was 2:1. Insoluble matter generated between the water layer and the chloroform layer during the interfacial reaction was filtered. The resulting solid was washed with water and then with chloroform, and then dried under reduced pressure, thereby obtaining the target sulfur-containing macromolecular compound.

### Example 2

A sulfur-containing macromolecular compound was obtained in the same manner as in Example 1, except that solution 1 and solution 2 were prepared so that the molar ratio of LS to OctdiEpo was 1.5:1.

### Example 3

A sulfur-containing macromolecular compound was obtained in the same manner as in Example 1, except that solution 1 and solution 2 were prepared so that the molar ratio of LS to OctdiEpo was 3:1.

### Example 4

A sulfur-containing macromolecular compound was obtained in the same manner as in Example 1, except that solution 1 and solution 2 were prepared so that the molar ratio of LS to OctdiEpo was 1:5.

### Example 5

A sulfur-containing macromolecular compound was obtained in the same manner as in Example 1, except that solution 1 and solution 2 were prepared so that the molar ratio of LS to OctdiEpo was 1:2.

### Example 6

A sulfur-containing macromolecular compound was obtained in the same manner as in Example 1, except that solution 1 and solution 2 were prepared so that the molar ratio of LS to OctdiEpo was 1:1.

### Example 7

A sulfur-containing macromolecular compound was obtained in the same manner as in Example 1, except that solution 1 and solution 2 were prepared so that the molar ratio of LS to OctdiEpo was 5:1.

### Comparative Example 1

According to the scheme shown in Fig. 2, a thioepoxy resin (Poly(S-OCtEpo-Bu)) with a low sulfur content was synthesized. First, 1,4-butanediol (316 mg, 3.52 mmol) and Na₂S (591 mg, 3.52 mmol, pentahydrate) were dissolved in 5 mL of water, and chloroform (5.0 mL) in which OctdiEpo (500 mg, 3.52 mmol) was dissolved was added thereto. Then, hexadecyltrimethylammonium bromide (7 mg, 19 µmol) was added as a phase-transfer catalyst, followed by stirring at room temperature (25°C) for 2 days (interfacial reaction). Insoluble matter generated between the water layer and the chloroform layer during the interfacial reaction was filtered, washed with water and chloroform, and then dried under reduced pressure. The resultant was obtained as the thioepoxy resin (Poly(S-OCtEpo-Bu)), which was the comparison sample.

### Example 8

As a reference, according to the scheme shown in Fig. 3, a sulfur-containing compound was obtained. Sulfur (1.04 g, 4.08 mmol) and Na₂S (1.37 g, 8.16 mmol, pentahydrate) were dissolved in 30 mL of water, followed by filtration, thereby obtaining solution 1 of a linear sulfur polymer (abbreviated as "LS"). Next, styrene epoxide (abbreviated as "StEpo," 1.37 mL, 12.2 mmol) was dissolved in 30 mL of chloroform to prepare solution 2, and 0.005 mmol of hexadecyltrimethylammonium bromide was further added as a phase-transfer catalyst to solution 2, followed by stirring at room temperature (25°C) for 18 hours to perform an interfacial reaction (polycondensation reaction). Solution 1 and solution 2 were prepared so that the molar ratio of LS to StEpo was 1:1. After stirring, the chloroform layer was extracted and dried over sodium sulfate, followed by filtration. The filtrate was evaporated and purified by column chromatography, thereby obtaining a sulfur-containing compound (LS-StEpo).

### Example 9

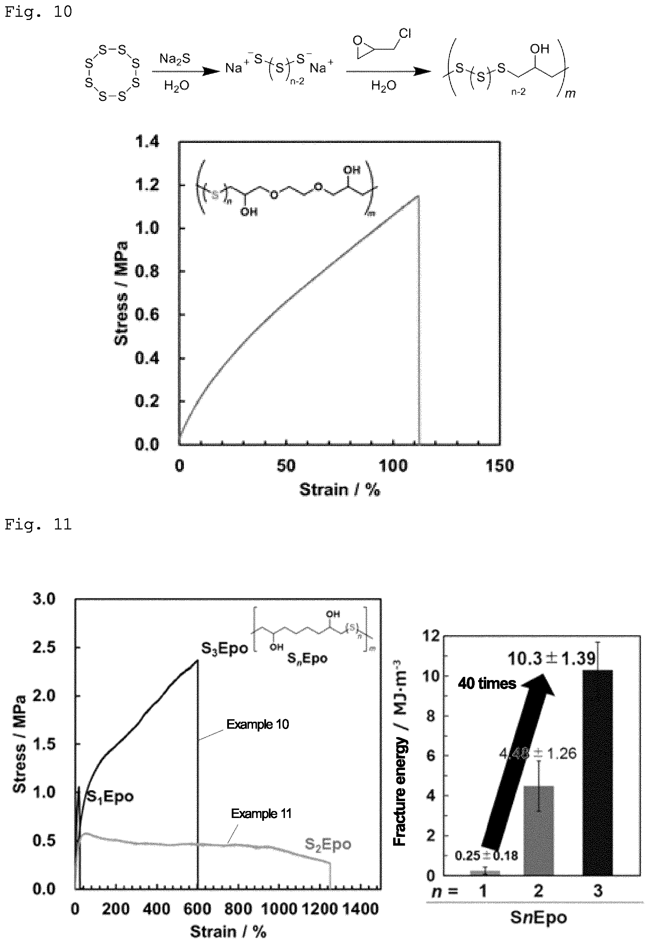

A sulfur-containing macromolecular compound was obtained in the same manner as in Example 1 (see the reaction scheme in Fig. 10 described below), except that epichlorohydrin was used in place of 1,2,7,8-diepoxyoctane.

### Example 10

A sulfur-containing macromolecular compound was obtained in the same manner as in Example 1, except that the amount of Na₂S used was changed to 2.04 mmol.

### Example 11

A sulfur-containing macromolecular compound was obtained in the same manner as in Example 1, except that the amount of Na₂S used was changed to 12.24 mmol.

### Example 12

A sulfur-containing macromolecular compound was obtained in the same manner as in Example 1, except that 1,2,7,8-diepoxyoctane was replaced with 11.7 mmol of adipoyl chloride.

### Comparative Example 2

A sulfur-containing macromolecular compound was obtained in the same manner as in Example 1, except that sulfur was not used.

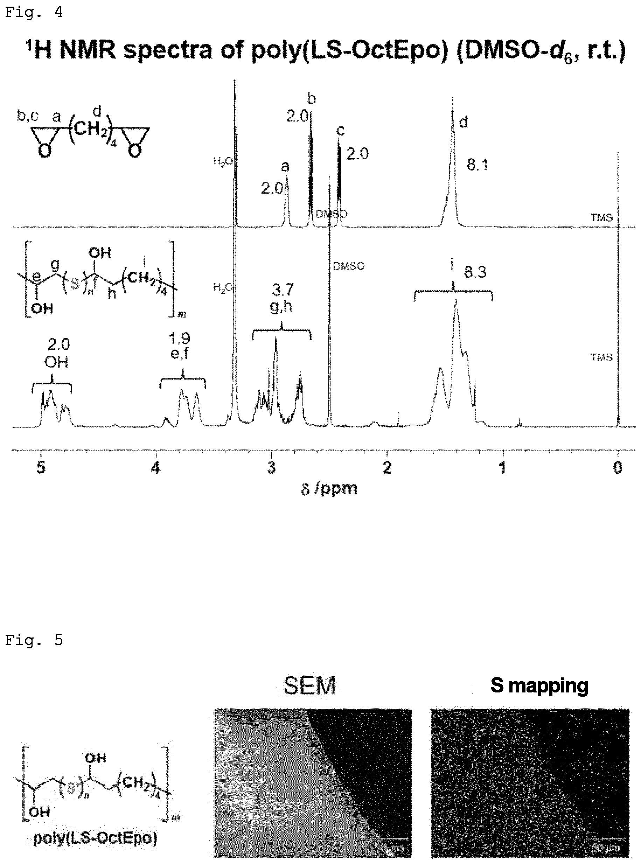

Fig. 4 shows the ¹H-NMR spectrum (measurement solvent: DMSO-D6) of the sulfur-containing macromolecular compound obtained in Example 1. The upper spectrum in Fig. 4 is the ¹H-NMR spectrum of the raw material OctdiEpo, and the lower spectrum is the ¹H-NMR spectrum of the sulfur-containing macromolecular compound obtained in Example 1. From these spectra, the appearance of a peak due to OH groups, and peak shift and broadening due to OctdiEpo were observed.

Further, the GPC measurement results of the sulfur-containing macromolecular compound obtained in Example 1 revealed that the number average molecular weight (Mn) of the sulfur-containing macromolecular compound obtained in Example 1 was 5700 (Mn/Mw = 1.1) .

Fig. 5 shows the elemental mapping results of the sulfur-containing macromolecular compound obtained in Example 1. SEM-EDX revealed that sulfur was uniformly dispersed. This confirmed that sulfur was uniformly introduced into the sulfur-containing macromolecular compound obtained in Example 1. Further, the elemental analysis of the S content in the sulfur-containing macromolecular compound revealed that about 40 mass% of S was present (in detail, C: 37.01 mass%, hydrogen: 6.31 mass%, and S: 41.46 mass%).

From the above, it was found that the sulfur-containing macromolecular compound obtained in Example 1 was a thioepoxy resin containing sulfur, and that the target product was obtained. In this sulfur-containing macromolecular compound, n in formula (1) (i.e., the number of S per structural unit) was estimated to be about 3 from the results of NMR, element analysis, etc. The value of n in the sulfur-containing macromolecular compound produced in Example 10 was estimated to be about 3, and n in the sulfur-containing macromolecular compound produced in Example 11 was estimated to be about 2. The value of n in the sulfur-containing macromolecular compound produced in Comparative Example 2 was about 1.

Table 1 shows the Mn, Mw, and S content of the sulfur-containing macromolecular compounds obtained in the Examples.

**Table 1**

| **Example** | **LS:OctdiEpo** | **Mn** | **Mw** | **S content (mass%)** |
|---|---|---|---|---|
| **Example 4** | **1:5** | **4500** | **4700** | **39.8** |
| **Example 5** | **1:2** | **5100** | **5300** | **39.6** |
| **Example 6** | **1:1** | **4600** | **4700** | **41.5** |
| **Example 1** | **2:1** | **4700** | **4900** | **41.5** |
| **Example 7** | **5:1** | **4900** | **5000** | **34.0** |

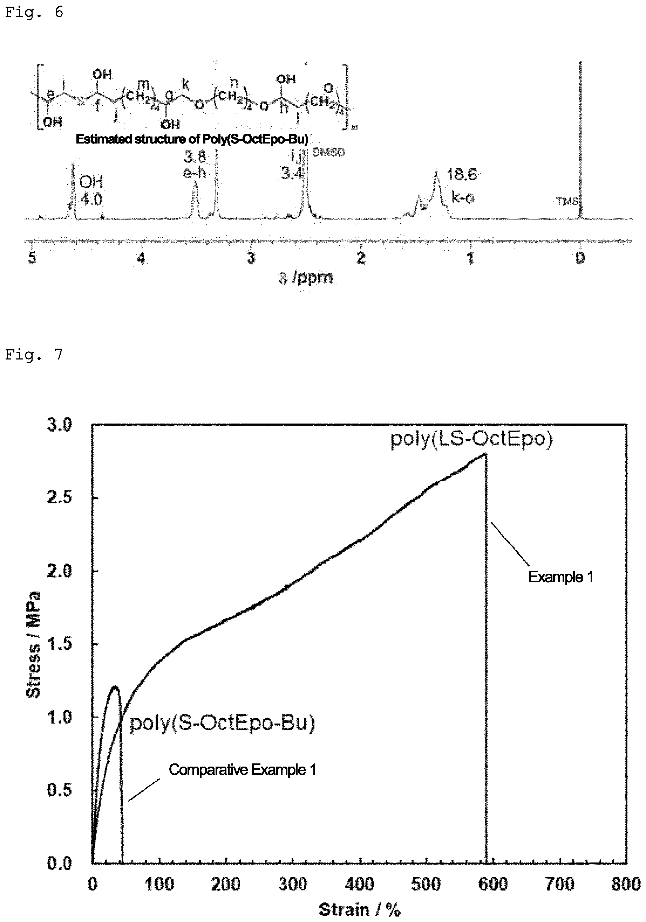

Fig. 6 shows the ¹H-NMR spectrum (measurement solvent: DMSO-D6) of the comparison sample obtained in Comparative Example 1. From this spectrum, peaks derived from OctdiEpo and butanediol were observed, in addition to the appearance of a new peak of OH groups. Further, when the sample obtained in Comparative Example 1 was measured by GPC, it was confirmed that the number average molecular weight (Mn) was 3100 (Mn/Mw = 1.64).

As a result of elemental analysis measurement of the comparison sample obtained in Comparative Example 1, the abundance of sulfur was about 11 mass% (C: 51.97 mass%, H: 8.83 mass%, S: 10.56 mass%), and this value was lower than that of the sulfur-containing macromolecular compound of Example 1 (S: 41.46 mass%). The reason why the comparison sample contains sulfur is because of Na₂S used in the reaction. This sulfur was not contained due to insufficient washing, but was introduced into the material, as confirmed by elemental mapping by SEM-EDX, which showed that sulfur mapping was uniformly dispersed in a range consistent with the SEM image. These results revealed that the comparison sample contained a small amount of sulfur.

### Mechanical Properties

Fig. 7 shows the results of the tensile test of the sulfur-containing macromolecular compound obtained in Example 1 and the comparison sample obtained in Comparative Example 1.

The tensile test (stroke-test force curve) was evaluated by observing the rupture point of the sample using an Autograph (model number: AGX-plus) produced by Shimadzu Corporation. With this rupture point taken as the final point, the maximum stress applied until the final point was determined to be the rupture stress of the macromolecular material. This tensile test was performed with the bottom end of the sheet-like macromolecular composite material fixed, and the upper end pulled at a tension rate of 1 mm/sec (upward operation). From this measurement, the Young's modulus and fracture energy of the macromolecular material were calculated. The sample was obtained by molding a dumbbell test piece (JIS K 6251, No. 2 dumbbell test piece, thickness: 0.2 mm).

As shown in Fig. 7, the comparison sample had a rupture stress of 1.20 MPa, a rupture strain of 29%, a Young's modulus of 3.04 MPa, and a fracture energy of 0.181 MJm⁻³, whereas the sulfur-containing macromolecular compound obtained in Example 1 had a rupture stress of 2.8 MPa, a rupture strain of 588%, a Young's modulus of 4.56 MPa, and a fracture energy of 10.3 MJm⁻³. In particular, the fracture energy was 57 times higher than that of the comparison sample.

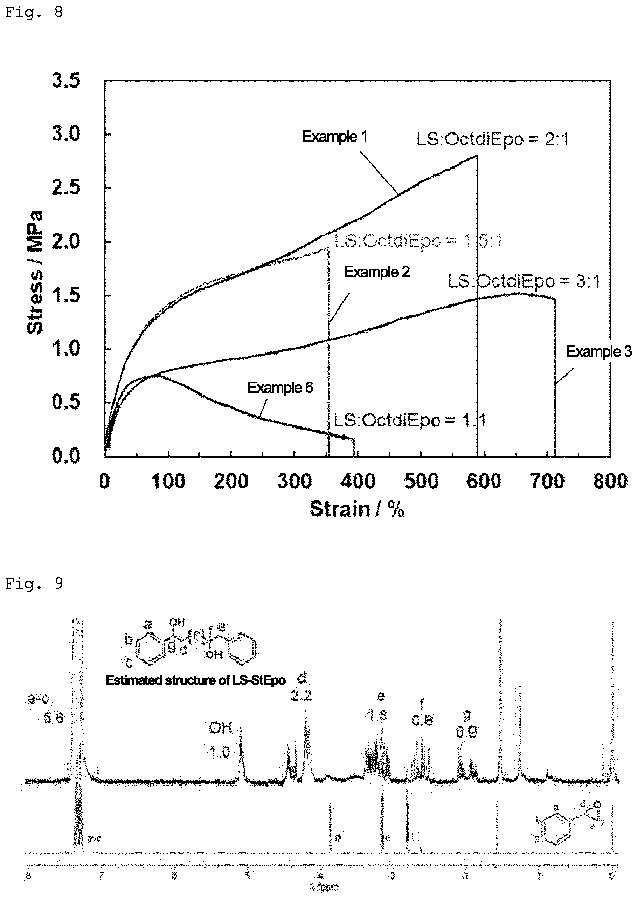

Fig. 8 shows the results of the tensile test of the sulfur-containing macromolecular compounds obtained in the Examples. The mechanical strength increased as the amount of LS (linear sulfur polymer) increased, and was maximum at a LS:OctdiEpo ratio of 2:1.

Interestingly, the mechanical strength of the sulfur-containing macromolecular compound obtained in Example 1 was found to be 4.4 times or more higher in fracture energy than the mechanical strength of polythioether (-(S)ₓ-(CH₂)_{y}-) previously reported (fracture energy of conventional polythioether: 1.37 to 2.32 MPa). It is presumed that this is because the sulfur-containing macromolecular compound obtained in Example 1 has hydroxyl groups in the molecule, which enable hydrogen bonds to be formed between polymers. Since hydrogen bonds can be formed and dissociated reversibly, when stress is applied to the material, the stress can be efficiently dispersed. In addition, the sulfur-containing macromolecular compound obtained in Example 1 was found to exhibit soft and tough mechanical properties that have not been seen in sulfur polymers so far, even when compared with polymers produced by the inverse vulcanization method.

### Chemical Stability

The chemical stability of the sulfur-containing macromolecular compound obtained in Example 1 was evaluated using hydrogen sulfide test paper (Isis Co., Ltd., model number: MN90761). As a result, no change was observed on the test paper. Therefore, no generation of hydrogen sulfide from the sulfur-containing macromolecular compound obtained in Example 1 was observed, indicating high chemical stability. Chemical stability using hydrogen sulfide test paper was evaluated using test tubes of 30 m/m and 200 m/m in size, based on the presence or absence of coloration of hydrogen sulfide test paper 24 hours after placing about 0.5 g of the sample in each test tube together with the test paper.

Fig. 9 shows the ¹H-NMR spectrum (measurement solvent: DMSO-D6) of the sulfur-containing compound obtained in Example 8. From this spectrum, a shift in the peak derived from StEpo and the appearance of a new peak derived from OH groups were observed. Elemental analysis measurement of the sulfur-containing compound obtained in Example 8 revealed that 35 mass% of sulfur was present (C: 52.35 mass%, H: 4.93 mass%, and S: 34.6 mass%).

### Self-Healing Properties

The sulfur-containing macromolecular compound obtained in Example 1 was used to form a material having a rectangular parallelepiped shape (length: 5 mm, width: 20 mm, thickness: 3 mm), and this material was cut with a utility knife. When the cut pieces were then brought into contact with each other at room temperature (25°C), they immediately adhered to each other and could be lifted up with tweezers. This result indicates that the sulfur-containing macromolecular compound obtained in Example 1 has a self-healing function.

### Adhesion

10 mg of the sulfur-containing macromolecular compound obtained in Example 1 was dissolved in 10 µL of tetrahydrofuran to prepare a solution. The solution was sandwiched between glass-glass, glass-stainless steel, glass-aluminum, and polytetrafluoroethylene (PTFE)-PTFE, and dried at room temperature (25°C) to obtain four types of laminates in total. When lifting the laminates while hanging a 500 g weight from the substrate on one side of each laminate, all the laminates were lifted without the weight falling. Therefore, the sulfur-containing macromolecular compound obtained in Example 1 was found to have an adhesion function as well.

In particular, PTFE, which has high water and oil repellency, could be bonded using the sulfur-containing macromolecular compound. Moreover, dissimilar materials, such as glass-stainless steel and glass-aluminum, could also be bonded together, indicating that the sulfur-containing macromolecular compound obtained in Example 1 can also be used as a dissimilar adhesive material.

### Gas Permeability

A 300 µm thick film of the sulfur-containing macromolecular compound obtained in Example 1 was prepared, and gas permeation measurements were performed for four types of gases, CO₂, O₂, N₂, and H₂O, using a GTR-10XACT produced by GTR TEC Corporation. As a result, the order of permeation was N₂, O₂, and H₂O, with CO₂ not permeating at all. These results revealed that the film of the sulfur-containing macromolecular compound obtained in Example 1 was not permeable to CO₂.

### Material Recycling Test

The sample after the tensile test of the sulfur-containing macromolecular compound obtained in Example 1 (i.e., the broken sample) was hot-pressed at 80°C, and then punched out into a dumbbell test piece and remolded. The remolded sample was again subjected to the same tensile test (re-tensile test). As a result, the S-S curve of the re-tensile test was in good agreement with the S-S curve of the tensile test of the sulfur-containing macromolecular compound (original) before remolding, indicating that it had the same rupture stress and rupture strain. These results revealed that the sulfur-containing macromolecular compound obtained in Example 1 is material recyclable.

### Hydrogen Sulfide Generation Measurement

The amount of hydrogen sulfide (H₂S) gas generated in the process of the polycondensation reaction performed in Example 1 was measured. In a conventional inverse vulcanization method, 850 mass ppm of hydrogen sulfide was generated, whereas in Example 1, the amount of hydrogen sulfide generated was so small that it was not detectable, confirming that the production of sulfur-containing macromolecular compounds can be carried out more safely. The inverse vulcanization method was as follows. Specifically, sulfur (1.00 g, 3.90 mmol, 50 wt%) was melted by heating at 160°C under a nitrogen atmosphere, and 1,3-diisopropenylbenzene (DIB 1.00g, 6.30 mmol, 50 wt%) was added thereto, followed by stirring for 24 hours to carry out the inverse vulcanization method.

### Odor Measurement

The odor measurement was carried out according to the following procedure.
1) One corner of a 5 L sampling bag (hereinafter referred to as the "5 L bag") was cut, 2 g of the sample was inserted into the 5 L bag, and the cut part was then sealed.
2) After degassing the 5 L bag with a vacuum pump, 2 L of high-purity nitrogen gas was injected into the 5 L bag through an integrating flow meter, and the bag was left to stand at room temperature for one day.
3) The sleeves of the 5 L bag and a 2 L sampling bag (hereinafter referred to as the "2 L bag") were connected with a silicone tube, and about 2 L of nitrogen gas in the 5 L bag was transferred into the 2 L bag.
4) The nitrogen gas in the 2 L bag was analyzed using a gas sensor array, and the similarity, odor contribution, and odor index equivalent value were determined using the included analysis software.

As a result of the odor measurement, the odor index equivalent value of the sulfur-containing macromolecular compound obtained in Example 1 was 8.6, whereas that of the sample produced by the inverse vulcanization method was 35. These results indicated that the sulfur-containing macromolecular compound obtained in Example 1 was almost odorless.

Fig. 10 shows the results of the tensile test of the sulfur-containing macromolecular compound obtained in Example 9. Above the graph in Fig. 10, the production scheme for the sulfur-containing macromolecular compound obtained in Example 9 is shown. From Fig. 10, the sulfur-containing macromolecular compound obtained in Example 9 was found to have a rupture stress of 0.81 MPa and a rupture strain of 89%, and had excellent mechanical properties.

Fig. 11 shows the results of the tensile test of the sulfur-containing macromolecular compounds obtained in Examples 10 and 11 and Comparative Example 2. The mechanical strength (rupture stress: 5.0 MPa, rupture strain: 350%) of the sulfur-containing macromolecular compound (n=2) obtained in Example 11 was higher than the mechanical strength (rupture stress: 1.0 MPa, rupture strain: 20%) of the sulfur-containing macromolecular compound (n=1) obtained in Comparative Example 2. This is considered to be because the introduction of disulfide bonds as sacrificial bonds dispersed stress and made the material stronger. Interestingly, the mechanical strength (rupture stress: 2.3 MPa, rupture strain: 600%, fracture energy: 10 MJ/m³) of the sulfur-containing macromolecular compound (n=3) obtained in Example 10 was even higher than that of Example 11. This is considered to be because, compared to C-C bonds, S-S bonds are inherently distorted, and are softer and have a wider range of motion for the bond angle, so that they tend to be stretched more easily when force is applied. In addition, the polymer is entangled, and when tension is applied, the entanglements decrease, resulting in elongation and the energy given to the polymer being used to cause crystallization. This synergistic effect is considered to increase the mechanical strength. These results indicated that increasing the sulfur content (increasing chain length) strengthened the polymer.

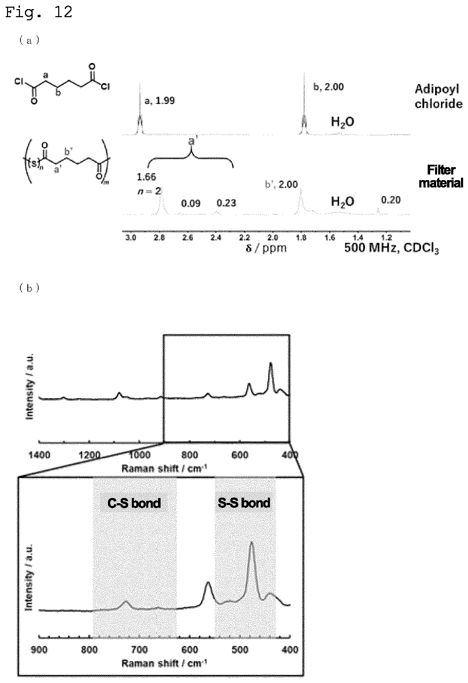

Fig. 12 (a) shows the ¹H-NMR spectrum of the sulfur-containing macromolecular compound obtained in Example 12, and (b) shows the microscopic Raman spectrum of the sulfur-containing macromolecular compound obtained in Example 12. The upper spectrum in Fig. 12 (a) is the ¹H-NMR spectrum of adipoyl chloride, and the lower spectrum is the ¹H-NMR spectrum of the sulfur-containing macromolecular compound obtained in Example 12.

In the ¹H-NMR spectra of Fig. 12 (a), it was observed that the "a" proton peak appeared in the spectrum of adipoyl chloride was shifted and broadened in the spectrum of the sulfur-containing macromolecular compound. This is also supported by the fact that peaks due to C-S bonds and S-S bonds are observed in the microscopic Raman spectrum of Fig. 12 (b). Regarding the molecular weight, the highest molecular weight was observed when prepared in a two-layer system. These results confirmed that polythioester using sulfur as a raw material could be synthesized.

## Claims

1. A sulfur-containing macromolecular compound having a structural unit represented by the following formula (1):
-R¹-R-R¹-(S)ₙ- (1)
wherein in formula (1), n represents a number of 1 or more, R represents an organic group, and two R¹s are the same or different and each represents a divalent organic group derived from a polycondensable functional group; the following formula (1'):
-R¹-R-(S)ₙ- (1' )
wherein in formula (1'), n, R, and R¹ are respectively the same as n, R, and R¹ in formula (1); or the following formula (1"):
-CO-(S)ₙ- (1")

2. The sulfur-containing macromolecular compound according to claim 1, wherein R¹ is -CH₂-CH(OH)-, -CH₂-CH₂-CH(OH)-, -CO-, - COO-, or -NHCO-.

3. A method for producing a sulfur-containing macromolecular compound, comprising reacting a linear sulfur polymer and compound C having at least two polycondensable functional groups to obtain a sulfur-containing macromolecular compound.

4. The method for producing a sulfur-containing macromolecular compound according to claim 3, wherein compound C is represented by the following formula (2):
R²-R-R² (2)
wherein in formula (2), R is an organic group, and two R²s are the same or different and each is a polycondensable functional group.

5. The method for producing a sulfur-containing macromolecular compound according to claim 4, wherein R² is an epoxy group, a halogen atom, a glycidyl group, -C(=O)X (X is a halogen atom), -COOH, or -NCO.

6. A polymer composition comprising the sulfur-containing macromolecular compound according to claim 1 or 2.

7. A sulfur-containing compound having a structure in which an organic group derived from a polycondensable functional group is bonded to each end of a sulfur polymer represented by the following formula (3):
-(S)ₙ- (3)
wherein in formula (3), n represents a number of 1 or more.
